# EUROPEAN PATENT SPECIFICATION

(11) **EP 1 950 914 B1**
(45) Date of publication and mention of the grant of the patent: **13.07.2011**
(21) Application number: 06840644.6
(22) Date of filing: 26.12.2006
(51) Int. Cl.: H04L 12/56

(54) **A METHOD, ROUTER AND SYSTEM FOR MULTICAST STREAM FORWARDING**
EIN VERFAHREN, ROUTER UND SYSTEM ZUR WEITERLEITUNG VON MULTICAST-STRÖMEN
PROCÉDÉ, ROUTEUR ET SYSTÈME POUR L'ACHEMINEMENT DE FLUX DE MULTIDIFFUSION

(30) Priority: 07.03.2006 CN 200610056817
(43) Date of publication of application: 30.07.2008
(73) Proprietor: Huawei Technologies Co., Ltd., Longgang District, Shenzhen Guangdong 518129 (CN)
(72) Inventor: XU, Xiaohu, Huawei Technologies Co., Ltd, Guangdong 518129 (CN)
(74) Representative: Thun, Clemens
(86) International application number: PCT/CN2006/003600
(87) International publication number: WO 2007/101379

(56) References cited:
- EP-A1- 1 548 978
- CN-A- 1 378 365
- CN-A- 1 483 266
- CN-A- 1 741 533
- US-A- 6 112 249
- US-A1- 2004 027 995
- ESTRIN USC D FARINACCI CISCO A HELMY USC D THALER UMICH S DEERING XEROX M HANDLEY UCL V JACOBSON LBL C LIU USC P SHARMA USC L WEI: "Protocol Independent Multicast-Sparse Mode (PIM-SM): Protocol Specification; rfc2362.txt" IETF STANDARD, INTERNET ENGINEERING TASK FORCE, IETF, CH, 1 June 1998 (1998-06-01), XP015008146 ISSN: 0000-0003
- AIGUO FEI ET AL: "A dual-tree scheme for fault-tolerant multicast" ICC 2001. 2001 IEEE INTERNATIONAL CONFERENCE ON COMMUNICATIONS. CONFERENCE RECORD. HELSINKY, FINLAND, JUNE 11 - 14, 2001; [IEEE INTERNATIONAL CONFERENCE ON COMMUNICATIONS], NEW YORK, NY : IEEE, US, vol. 3, 11 June 2001 (2001-06-11), pages 690-694, XP010553091 ISBN: 978-0-7803-7097-5
- ZAPPALA D: "Alternate path routing for multicast" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, vol. 3, 26 March 2000 (2000-03-26), pages 1576-1585, XP010376095 ISBN: 978-0-7803-5880-5

## Description

### Field of the Technology

This invention relates generally to the area of telecommunications, and more particularly to a method, apparatus and system for forwarding a multicast stream when a unicast route from a router to a multicast source changes.

### Background of the Invention

Protocol Independent Multicast (PIM) is a multicast routing protocol independent of unicast routing protocols. It does not depend on a specific unicast routing protocol. When using PIM, reverse path forwarding (RPF) checking can be implemented by using an existing unicast routing table. When using a protocol independent multicast-sparse mode (PIM-SM), a rendezvous point tree (RPT) based on a rendezvous point or a source path tree (SPT) based on a source may be established by using Join or Prune messages. Join or Prune messages are explicitly sent by a PIM router. A multicast stream is received by a network segment to which the multicast group belongs via the RPT or SPT. Protocol independent multicast-source-specific multicast (PIM-SSM) is an improvement of PIM-SM. When using PIM-SSM, an SPT is established by using Join or Prune messages explicitly sent by a PIM router, and the process of establishing an RAPT and switching between an RPT and an SPT can be bypassed.

With the development and growth of broadband network technologies, more and more network operators provide high-quality Internet protocol television (IPTV) services to the public by deploying PIM multicast networks so as to increase revenue of broadband services. In other words, IPTV provides high-definition broadband video services to the public by using multicast technology in IP networks. Therefore, reliability of PIM multicast networks is very important to network operators. Reliability of PIM multicast networks is to reduce the impact on IPTV services caused by network faults to the minimum.

The process of switching an SPT under conventional PIM-SM technology by changing a unicast route is described as follows:
When a unicast route changes, an RPF checking is done on all active (S,G), (*,G) and (*,*,RP) entries, and all affected incoming interfaces are updated. In particular, if a new incoming interface appears in an outgoing interface list, it is deleted from the outgoing interface list. The previous incoming interfaces may be added to the outgoing interface list by a subsequent Join/Prune message from downstream. Join/Prune messages received on the current incoming interface are ignored. Join/Prune messages received on new interfaces or existing outgoing interfaces are not ignored. Other outgoing interfaces are left as is until they are explicitly pruned by downstream routers or are timed out due to lack of appropriate Join/Prune messages. If a router has an (S,G) entry with an SPT-bit set, and the updated iif(S,G) (Incoming Interface (Source, Group)) does not differ from iif(*,G) or iif(*,*,RP), then the router resets the SPT-bit.

The router must send a Join message with S in the Join list via a new incoming interface to inform upstream routers that it expects a multicast stream over the new incoming interface. It may also send a Prune message with S in the Prune list via the old incoming interface, if the old incoming interface is still active, to inform upstream routers that this part of the distribution tree is going away.

In the above conventional PIM-SM technology, if a unicast route to a multicast source for computing reverse path forwarding changes, for example, the unicast route changes from the second-best route to the best route, a PIM router sends a Join message to a new upstream PIM router to establish a new SPT. If the old incoming interface is still active, the PIM router sends a Prune message to the old upstream PIM router to prune the prior SPT. However, once the prior SPT is pruned, transmitting for a multicast stream is broken until the new SPT is completely established.

US patent No. US 2004/0027995A1 provides a publish/subscribe system, such that messages are not lost during the reconfiguration. After the reconfiguration is initiated, messages that are to be delivered with the publish/subscriber system are forwarded using either an old path or a new path. After the system is stabilized, the new path is used for delivery of all the messages.

RFC 2362 describes a protocol for efficiently routing to multicast groups that may span wide-area intemets. When unicast routing changes, the router must send a Join/Prune message with S in the Join list out any new incoming interfaces, to inform upstream routers that it expects multicast datagrams over the interface.

### Summary of the Invention

A method for forwarding a multicast stream is provided in accordance with an embodiment of the present invention. In conventional technologies, transmitting a multicast stream will be broken when a multicast forwarding path switches wherein the switch is caused by that a unicast route to a multicast source or a rendezvous point changes. The method in accordance with an embodiment of the invention can solve the above problem.

Based on the above method, a router for forwarding a multicast stream is provided in accordance with another embodiment of the present invention.

A system for forwarding a multicast stream is provided in accordance with another embodiment of the present invention.

A method for forwarding a multicast stream in accordance with an embodiment of the present invention, when a unicast route from a router to a multicast source or a rendezvous point changes from a first route to a second route, wherein the first route is corresponding to a prior multicast forwarding path between a first upstream router(routerR2) and a downstream router(routerR3), the second route is corresponding to a new multicast forwarding path between a second upstream router(routerR1) and the downstream router(routerR3), a multicast stream is forwarded via the prior multicast forwarding path, the method including:
establishing the new multicast forwarding path between the downstream router and the second upstream router, and keeping receiving the multicast stream from the first upstream router (routerR2) via a first incoming interface (E1) corresponding to said prior multicast forwarding path and forwarding the multicast stream via the prior multicast forwarding path before the multicast stream forwarded via the new multicast forwarding path is received by the downstream router;
pruning the prior multicast forwarding path and discarding the multicast stream from the prior multicast forwarding path once the multicast stream forwarded via the new multicast forwarding path is received by the downstream router.

In the method in accordance with an embodiment of the present invention, the downstream router ignores or terminates said multicast stream received via the prior multicast forwarding path once the multicast stream is received via the new multicast forwarding path by the downstream router.

In the method in accordance with an embodiment of the present invention, the downstream router sends a Join message via a second incoming interface connected to the second upstream router corresponding to the second route; and
establishes the new multicast forwarding path from the second upstream router to the second incoming interface.
the downstream router keeps receiving the multicast stream from the first upstream router (routerR2) via a first incoming interface (E1) corresponding to said prior multicast forwarding path and forwarding the multicast stream via the prior multicast forwarding path includes: receiving, by the downstream router, the multicast stream via the first incoming interface (E1); and
forwards the multicast stream to a downstream device of the router via an outgoing interface designated by the downstream router.
the downstream router sends a Prune message to the first upstream router corresponding to the prior multicast forwarding path via the first incoming interface.

In the method in accordance with an embodiment of the present invention, when the prior multicast forwarding path is a source path tree SPT, the downstream router establishes a new source path tree SPT.

When the prior multicast forwarding path is a rendezvous point tree RPT, the downstream router establishes a new rendezvous point tree RPT.

A router for forwarding a multicast stream when a unicast route to a multicast source or a rendezvous point changes from a first route to a second route in accordance with an embodiment of the present invention includes:
a routing module, a forwarding module, a detecting module, an outgoing interface, and at least two incoming interfaces, wherein
the incoming interfaces are adapted to receive a multicast stream hum upstream routers;
the outgoing interface is adapted to forward the multicast stream to a downstream device;
the forwarding module is adapted to forward the multicast stream to the outgoing interface pursuant to an instruction of the routing module, wherein the multicast stream is received via an incoming interface designated;
the detecting module is adapted to detect whether the multicast stream is received via the incoming interface;
the routing module is adapted to
send a first instruction to establish a new multicast forwarding path via the second incoming interface when the unicast route from the downstream router to the multicast source or the rendezvous point changes from the first route to the second route, send a second instruction for pruning a prior multicast forwarding path corresponding to the first route via the first incoming interface upon the condition of receiving the multicast stream via the second incoming interface, and
instruct the forwarding module to forward the multicast stream to the outgoing interface, wherein the multicast stream is received via the incoming interface connected to the upstream router corresponding to the second route.

In the router, the routing module is adapted to inform the incoming interface to terminate the multicast stream received via the incoming interface connected to the upstream router corresponding to the first route when the routing module is informed that the detecting module detects that the multicast stream is received via the incoming interface connected to the upstream router corresponding to the second route.

In the router, the routing module is adapted to send a Join message to the upstream router via the incoming interface connected to the upstream router corresponding to the second route to establish the new multicast forwarding path from the router to the incoming interface.

In the router, the routing module is adapted to send a Prune message to the upstream router via the incoming interface connected to the upstream router corresponding to the first route to prune the prior multicast forwarding path from the router to the incoming interface.

A system for forwarding a multicast stream when a unicast route to a multicast source or a rendezvous point changes in accordance with an embodiment of the present invention includes: a multicast source, a first upstream router connected with the multicast source, a second upstream router, a downstream device, and a downstream router as described above.

The advantages of embodiments of the present invention are as follows.
(1) When a unicast route from a router to a multicast source or a rendezvous point changes, e.g., the best route takes the place of the second-best route, a multicast forwarding path will switch. The router keeps receiving and forwarding a multicast stream via a prior multicast forwarding path until the multicast stream is received via a new multicast forwarding path during the router establishes the new multicast forwarding path. The prior multicast forwarding path is not pruned until the multicast stream is received via the new multicast forwarding path.

Therefore, transmitting a multicast stream will not be broken during the forwarding process.
(2) The router ignores or terminates the multicast stream received from the prior multicast forwarding path upon the router receives the multicast stream via the new multicast forwarding path, and thereby mistakes in receiving and playback of the multicast stream will not be caused by receiving the multicast stream via both the old incoming interface and the new incoming interface.

### Brief Description of the Drawings

Figure 1 is a flowchart illustrating a method for forwarding a multicast stream by a PIM router if a unicast route to a multicast source changes in accordance with the present invention.
Figure 2 is a simplified block diagram illustrating a system for forwarding a multicast stream in accordance with an exemplary embodiment of the present invention.
Figure 3 is a simplified block diagram illustrating a system for transmitting a multicast stream, shown before a unicast route has changed in accordance with an exemplary embodiment of the present invention.
Figure 4 is a simplified block diagram illustrating a system for forwarding a multicast stream when a unicast route changes in accordance with an exemplary embodiment of the present invention.
Figure 5 is a simplified block diagram illustrating a system for transmitting a multicast stream after a unicast route changes in accordance with an exemplary embodiment of the present invention.
Figure 6 is a simplified block diagram depicting the structure of a router in accordance with an exemplary embodiment of the present invention.

### Embodiments of the Invention

In embodiments of the present invention, if a unicast route to a multicast source or a rendezvous point (RP) changes, for example, the unicast route changes from the second-best route to the best route, a PIM router will keep forwarding a multicast stream received from an old incoming interface until the multicast stream is received from a new incoming interface. Until the multicast stream reaches the new incoming interface, the PIM router will not send a Prune message to an old upstream router corresponding to the old incoming interface, and the PIM router will not discard the multicast stream received from the old incoming interface.

Therefore, the multicast stream will be transmitted continuously.

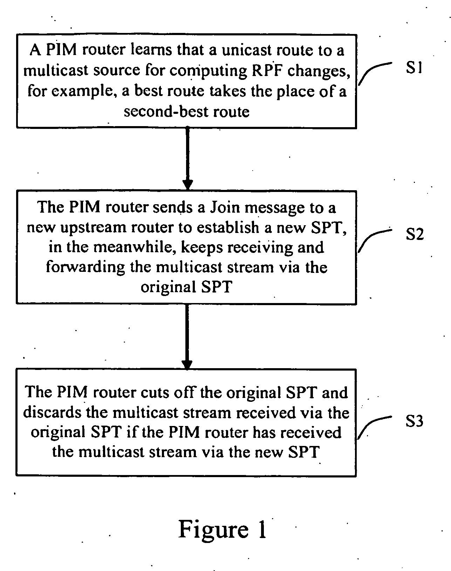

Figure 1 is a flowchart illustrating a method for forwarding a multicast stream by a PIM router if a unicast route to a multicast source changes in accordance with an exemplary embodiment of the present invention. As shown in Figure 1, the method is detailed as follows:

In block S1, a PIM router learns that a unicast route to a multicast source for computing RPF changes, for example, a best route takes the place of a second-best route.

In block S2, the PIM router sends a Join message to a new upstream router corresponding to the best route so as to establish a new SPT. Meanwhile, the PIM router keeps receiving a multicast stream and forwarding the multicast stream via a prior SPT.

In block S3, if the PIM router receives the multicast stream via the new SPT, the PIM router forwards the multicast stream via the new SPT. The PIM router will also send a Prune message to an old upstream router corresponding to the prior SPT to prune the prior SPT, and the PIM router discards the multicast stream received via the prior SPT.

The above method for forwarding a multicast stream is implemented by a system for forwarding a multicast stream according to embodiments of the present invention. In an embodiment of the present invention, a system for forwarding a multicast stream includes a multicast source, a multicast receiver and more than one router for forwarding a multicast stream. In these routers, there are a head-end router is connected to the multicast source, a tail-end router is connected to the multicast receiver and other intermediate routers connected to one another between the head-end router and the tail-end router. A multicast stream from the multicast source reaches the multicast receiver via a multicast forwarding path formed by the routers.

A system including three routers for forwarding a PIM-SM multicast stream is detailed according to an embodiment of the present invention.

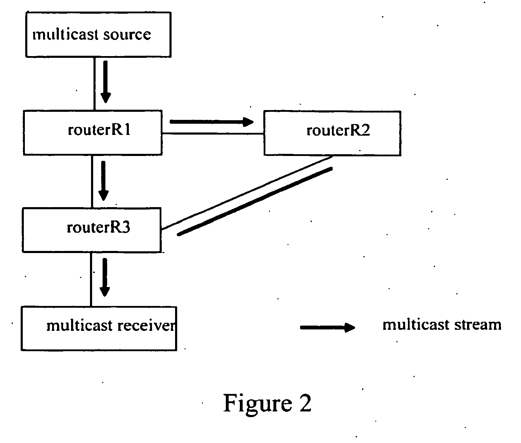

Figure 2 is a simplified block diagram illustrating a system for forwarding a multicast stream in accordance with an exemplary embodiment of the present invention. As shown in Figure 2, the system includes a multicast source of multicast stream, a multicast receiver of multicast stream, and three PIM routers: R1, R2 and R3. R1 is connected to the multicast source. R3 is connected to the multicast receiver. R2 is connected to R1 and R3. R1 is connected to R3.

During an SPT switchover caused by a change of a unicast route to a multicast source, for example, a best route takes the place of a second-best route. A multicast stream forwarding process is detailed below.

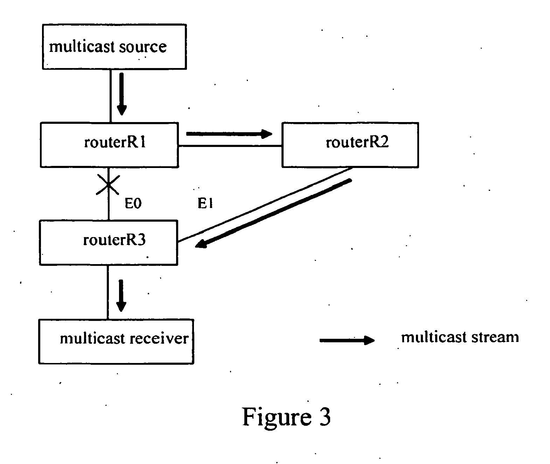

Figure 3 is a simplified block diagram illustrating a system for transmitting a multicast stream, shown before a unicast route has changed in accordance with an exemplary embodiment of the present invention. As shown in Figure 3, the link between PIM routers R1 and R3 is not operational. For R3, the next hop to the multicast source is R2, while for R2, the next hop to a multicast source is R1. All PIM routers send Join messages periodically via the shortest path to the multicast source. An SPT is established and maintained. The multicast stream is sent from the multicast source to the multicast receiver via the established SPT. In other words, the SPT is R1 - >R2 - >R3. R3 receives the multicast stream via interface E1. E1 is an incoming interface on R3 connected to its upstream neighbouring router R2.

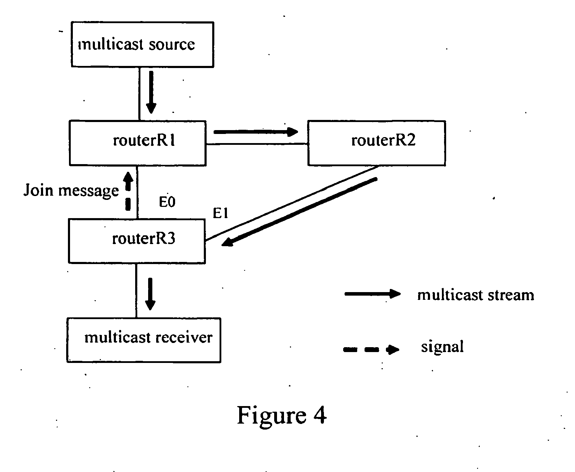

If the link between R1 and R3 becomes operational, PIM router R3 learns that the unicast route to the multicast source has changed. In other words, the best route takes the place of the second-best route. The next hop to the multicast source changes from R2 to R1. R3 sends a Join message to R1 which is a new upstream neighbouring router via a new incoming interface E0. As shown in Figure 4, a new SPT is established from R1 to R3. R3 keeps forwarding the multicast stream received from the old incoming interface E1 until R3 receives the multicast stream from the new incoming interface E0 and forwarding the multicast stream via the old interface.

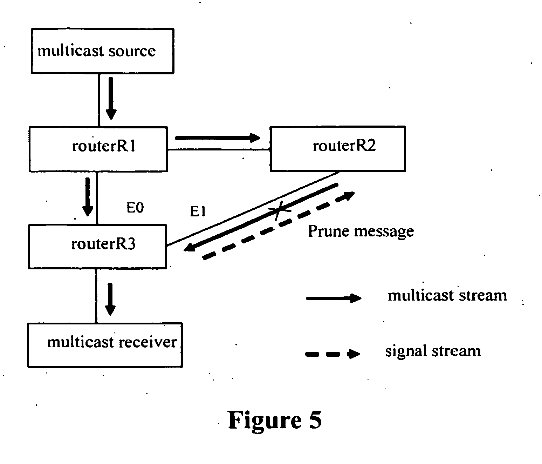

If R3 receives the multicast stream via the new incoming interface E0, as shown in Figure 5, R3 may immediately prune the prior SPT by sending a PIM Prune message to the old upstream router R2. R3 ignores the multicast stream received via interface E1 from then on. Therefore it may be avoided that the duplicate multicast stream received via the incoming interfaces causes a mistake on the multicast receiver and affects the playing of the multicast stream. R3 forwards the multicast stream to the multicast receiver via the old outgoing interface wherein the multicast stream is received via the incoming interface E0.

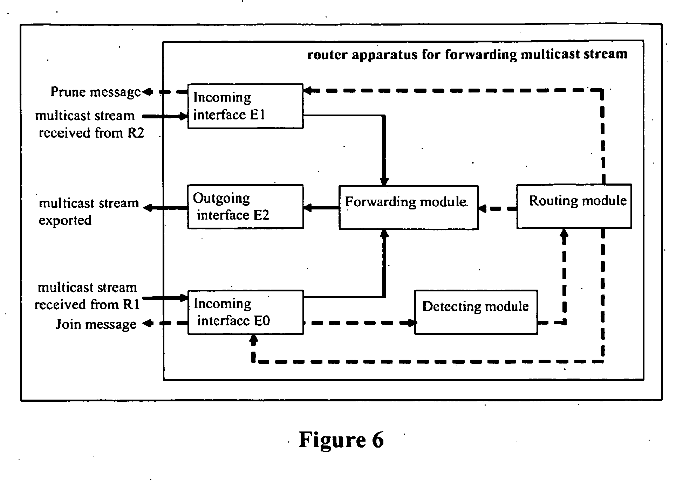

Figure 6 is a simplified block diagram depicting the structure of a router apparatus in accordance with an exemplary embodiment of the present invention. As shown in Figure 6, the above-mentioned routers R1 R2 and R3 include a routing module, a forwarding module, a detecting module and more than one incoming/outgoing interface such as incoming interface E0 connected to R1, incoming interface E1 connected to R2 and an outgoing interface. The forwarding module is connected to incoming interface E0, interface E1 and the outgoing interface and is configured to forward a multicast stream. The routing module is connected to the incoming interfaces E0 and E1 and is configured to instruct the incoming interface E0/E1 to establish or prune a multicast forwarding path corresponding to the incoming interface E0/E1.

The routing module is connected to the forwarding module and is configured to instruct the forwarding module to forward the multicast stream. The detecting module is connected to the incoming interface E0 and the routing module. The detecting module is configured to detect a condition of receiving the multicast stream via the incoming interface E0. As shown in Figure 6, solid lines denote the mulitcast stream while broken lines denote a signal stream.

Correspondingly, during an SPT switchover caused by a change of a unicast route to a multicast source, for example, the best route takes the place of the second-best route. A process for forwarding a multicast stream is detailed as follows:

Originally, the link between R3 and R1 is not operational. A multicast stream is transmitted from the multicast source to the multicast receiver via an prior SPT (R1 - >R2 - >R3). R3 receives the multicast stream via the incoming interface E1 connected to the upstream neighbouring router R2. The forwarding module sends the multicast stream to the multicast receiver via an outgoing interface designated by the routing module.

Once the route to the mulitcast source switches from the second-best route to the best route, in other words, the link between R1 and R3 becomes operational, the routing module sends a PIM Join message to R1 via the incoming interface E0 connected to R1 and establishes a new SPT from R1 to R3. And the routing module instructs the incoming interface E1 connected to router R2 to keep receiving the multicast stream.

As the detecting module detects that the multicast stream is received via the incoming interface E0, the detecting module will inform the routing module, the routing module then instructs the incoming interface E1 to send a PIM Prune message to R2 to prune the prior SPT and instructs the incoming interface E1 to ignore the multicast stream received from then on. The routing module instructs the forwarding module to forward the multicast stream received via the incoming interface E0 to the multicast receiver via an outgoing interface designated by the routing module.

The above embodiments of the invention take PIM-SM as an example and detail the process of forwarding a multicast stream when a unicast route to a multicast source changes, e.g., the best route takes the place of the second-best route. In the case that PIM-SSM is adopted, if a unicast route to a multicast source changes, e.g., the best route takes the place of the second-best route, the process of forwarding a multicast stream is similar to the process detailed above. In the case that PIM-SM is adopted and a multicast stream is forwarded via an RPT, if a unicast route to an RP changes, for example, the best route takes the place of the second-best route, the process of forwarding a multicast stream is similar to the process detailed above.

It can be seen from the above description that, if a unicast route to a multicast source changes, e.g., the best route takes the place of the second-best route, a PIM router keeps forwarding a multicast stream received via the old incoming interface until the multicast stream is received via a new incoming interface. When the multicast stream is received via the new incoming interface, the PIM router sends a Prune message to its old upstream neighbouring router and prunes the prior multicast forwarding path. Therefore, the multicast stream transmitting will not be interrupted. If the multicast stream is received via the new incoming interface, the PIM router discards the multicast stream received via the old incoming interface. Therefore, mistakes in receiving and playback of the multicast stream will not be caused by receiving the multicast stream via both the old incoming interface and the new incoming interface.

Although preferred embodiments are disclosed herein, many variations, alternatives and substitutions are possible which remain within the concept and scope of the invention, and these variations would become clear to those skilled in the art after perusal of this application. Accordingly, it is not intended to limit the invention except as provided by the appended claims.

## Claims

1. A method for forwarding a multicast stream when a unicast route to a multicast source or a rendezvous point changes from a first route to a second route, wherein the first route is corresponding to a prior multicast forwarding path between a first upstream router (routerR2) and a downstream router (routerR3), the second route is corresponding to a new multicast forwarding path between a second upstream router (routerR1) and the downstream router (routerR3), a multicast stream is forwarded via the prior multicast forwarding path, **characterized by** comprising:
establishing (S2) the new multicast forwarding path between the downstream router (routerR3) and the second upstream router (routerR1);
keeping (S2) receiving the multicast stream from the first upstream router (routerR2) via a first incoming interface (E1) corresponding to said prior multicast forwarding path and forwarding the multicast stream via the prior multicast forwarding path before the multicast stream forwarded via the new multicast forwarding path is received by the downstream router (routerR3); and
pruning (S3) said prior multicast forwarding path and discarding the multicast stream from the prior multicast forwarding path once the multicast stream forwarded via the new multicast forwarding path is received by the downstream router (routerR3).

2. The method of claim 1, wherein said establishing the new multicast forwarding path between the downstream router (routerR3) and the second upstream router (routerR1) comprises:
sending a Join message via a second incoming interface (E0) connected to said second upstream router (routerR1); and
establishing said new multicast forwarding path from said second upstream router (routerR1) to said second incoming interface (E0).

3. The method of claim 1, wherein said keeping receiving the multicast stream from the first upstream router (routerR2) via a first incoming interface (E1) corresponding to said prior multicast forwarding path and forwarding the multicast stream via the prior multicast forwarding path comprises:
receiving, by said downstream router (routerR3), said multicast stream via the first incoming interface (E1) ; and
forwarding, by said downstream router (routerR3), said multicast stream to a downstream device of said downstream router (routerR3) via an outgoing interface designated by said downstream router (routerR3).

4. The method of claim 1, wherein said pruning said prior multicast forwarding path comprises:
sending a Prune message to the first upstream router (routerR2) corresponding to said prior multicast forwarding path via the first incoming interface (E1).

5. The method of claim 1, wherein when said prior multicast forwarding path is a source path tree, said establishing the new multicast forwarding path between the downstream router (routerR3) and the second upstream router (routerR1) corresponding to the second route comprises:
establishing a new source path tree.

6. The method of claim 5, wherein the unicast route from said downstream router (routerR3) to the multicast source of said multicast stream is changed from said first route to said second route comprises:
said unicast route from said downstream router (routerR3) to said multicast source of said multicast stream is changed from a second-best route to a best route.

7. The .method of claim 1, wherein when said prior multicast forwarding path is a rendezvous point tree, said establishing the new multicast forwarding path between the downstream router (routerR3) and the second upstream router (routerR1) comprises:
establishing a new rendezvous point tree.

8. The method of claim 7, wherein the unicast route from said downstream router (routerR3) to the rendezvous point of said multicast stream is changed from said first route to said second route comprises:
said unicast route from said downstream router (routerR3) to said rendezvous point of said multicast stream is changed from a second-best route to a best route.

9. An apparatus for forwarding a multicast stream when a unicast route to a multicast source or a rendezvous point changes from a first route to a second route, comprising:
a routing module, a forwarding module, a detecting module, an outgoing interface ( E2), a first incoming interface (E1), and a second incoming interface (E0), wherein
said first and second incoming interfaces are adapted to receive a multicast stream from upstream routers, said first incoming interface (E1) is in communication with a first upstream router corresponding to a first route, and said second incoming interface (E0) is in communication with a second upstream router (routerR1) corresponding to a second route;
said outgoing interface (E2) is adapted to forward said multicast stream to a downstream device;
said forwarding module is adapted to forward said multicast stream to said outgoing interface (E2) pursuant to an instruction of said routing module, wherein said multicast stream is received via an incoming interface designated by said routing module;
**characterized in that**, said detecting module is adapted to detect whether said multicast stream is received via said second incoming interface (E0);
said routing module is adapted to
send a first instruction to establish a new multicast forwarding path via said second incoming interface (E0) when the unicast route from the downstream router (routerR3) to the multicast source or the rendezvous point changes from said first route to said second route,
send a second instruction for pruning a prior multicast forwarding path corresponding to said first route via said first incoming interface (E1) upon said condition of receiving said multicast stream via said second incoming interface (E0),
instruct said forwarding module to forward said multicast stream to said outgoing interface, wherein said multicast stream is received via said second incoming interface (E0), and
inform said first incoming interface (E1) to terminate said multicast stream received via said second incoming interface (E0) when said
routing module is informed that said detecting module detects that said multicast stream is received via said second incoming interface (E0).

10. The apparatus of claim 9, wherein said routing module is adapted to send a Join message to said second upstream router (routerR1) via said second incoming interface (E0) to establish said new multicast forwarding path.

11. The apparatus of claim 9, wherein said routing module is adapted to send a Prune message to said first upstream router (routerR2) via said first incoming interface (E1) to prune said prior multicast forwarding path.

12. A system for forwarding a multicast stream when a unicast route to a multicast source or a rendezvous point changes, comprising:
a multicast source, a first upstream router (routerR2) connected with the multicast source, a second upstream router (routerR1), a downstream device, and
**characterized in that**, the system further comprises a downstream router (routerR3) according to anyone of claims 9-11.

## Patentansprüche

1. Verfahren zum Weiterleiten eines Multicast-Stroms, wenn sich eine Unicast-Route zu einer Multicast-Quelle oder einem Rendezvouspunkt von einer ersten Route zu einer zweiten Route ändert, wobei die erste Route einem vorherigen Multicast-Weiterleitungspfad zwischen einem ersten Upstream-Router (Router R2) und einem Downstream-Router (Router R3) entspricht, die zweite Route einem neuen Multicast-Weiterleitungspfad zwischen einem zweiten Upstream-Router (Router R1) und dem Downstream-Router (Router R3) entspricht und ein Multicast-Strom über den vorherigen Multicast-Weiterleitungspfad weitergeleitet wird, **gekennzeichnet durch** die folgenden Schritte:
Herstellen (S2) des neuen Multicast-Weiterleitungspfads zwischen dem Downstream-Router (Router R3) und dem zweiten Upstream-Router (Router R1);
Weiterempfangen (S2) des Multicast-Stroms von dem ersten Upstream-Router (Router R2) über eine erste ankommende Schnittstelle (E1), die dem vorherigen Multicast-Weiterleitungspfad entspricht, und Weiterleiten des Multicast-Stroms über den vorherigen Multicast-Weiterleitungspfad, bevor der über den neuen Multicast-Weiterleitungspfad weitergeleitete Multicast-Strom **durch** den Downstream-Router (Router R3) empfangen wird; und
Stutzen (S3) des vorherigen Multicast-Weiterleitungspfads und Verwerfen des Multicast-Stroms aus dem vorherigen Multicast-Weiterleitungspfad, sobald der über den neuen Multicast-Weiterleitungspfad weitergeleitete Multicast-Strom **durch** den Downstream-Router (Router R3) empfangen wird.

2. Verfahren nach Anspruch 1, wobei das Herstellen des neuen Multicast-Weiterleitungspfads zwischen dem Downstream-Router (Router R3) und dem zweiten Upstream-Router (Router R1) Folgendes umfasst:
Senden einer Join-Nachricht über eine zweite ankommende Schnittstelle (E0), die mit dem zweiten Upstream-Router (Router R1) verbunden ist; und
Herstellen des neuen Multicast-Weiterleitungspfads von dem zweiten Upstream-Router (Router R1) zu der zweiten ankommenden Schnittstelle (E0).

3. Verfahren nach Anspruch 1 , wobei das Weiterempfangen des Multicast-Stroms von dem ersten Upstream-Router (Router R2) über eine erste ankommende Schnittstelle (E1), die dem vorherigen Multicast-Weiterleitungspfad entspricht, und das Weiterleiten des Multicast-Stroms über den vorherigen Multicast-Weiterleitungspfad Folgendes umfasst:
Empfangen des Multicast-Stroms durch den Downstream-Router (Router R3) über die erste ankommende Schnittstelle (E1); und
Weiterleiten des Multicast-Stroms durch den Downstream-Router (Router R3) zu einer Downstream-Einrichtung des Downstream-Routers (Router R3) über eine durch den Downstream-Router (Router R3) designierte abgehende Schnittstelle.

4. Verfahren nach Anspruch 1, wobei das Stutzen des vorherigen Multicast-Weiterleitungspfads Folgendes umfasst:
Senden einer Prune-Nachricht zu dem ersten Upstream-Router (Router R2), der dem vorherigen Multicast-Weiterleitungspfad entspricht, über die erste ankommende Schnittstelle (E1).

5. Verfahren nach Anspruch 1, wobei, wenn der vorherige Multicast-Weiterleitungspfad ein Quellenpfadbaum ist, das Herstellen des neuen Multicast-Weiterleitungspfads zwischen dem Downstream-Router (Router R3) und dem zweiten Upstream-Router (Router R1), der der zweiten Route entspricht, Folgendes umfasst:
Herstellen eines neuen Quellenpfadbaums.

6. Verfahren nach Anspruch 5, wobei die Änderung der Unicast-Route von dem Downstream-Router (Router R3) zu der Multicast-Quelle des Multicast-Stroms von der ersten Route zu der zweiten Route Folgendes umfasst:
die Unicast-Route von dem Downstream-Router (Router R3) zu der Multicast-Quelle des Multicast-Stroms wird von einer zweitbesten Route zu einer besten Route geändert.

7. Verfahren nach Anspruch 1, wobei, wenn der vorherige Multicast-Weiterleitungspfad ein Rendezvouspunktbaum ist, das Herstellen des neuen Multicast-Weiterleitungspfads zwischen dem Downstream-Router (Router R3) und dem zweiten Upstream-Router (Router R1) Folgendes umfasst:
Herstellen eines neuen Rendezvouspunktbaums.

8. Verfahren nach Anspruch 7, wobei die Änderung der Unicast-Route von dem Downstream-Router (Router R3) zu dem Rendezvouspunkt des Multicast-Stroms von der ersten Route zu der zweiten Route Folgendes umfasst:
die Unicast-Route von dem Downstream-Router (Router R3) zu dem Rendezvouspunkt des Multicast-Stroms wird von einer zweitbesten Route zu einer besten Route geändert.

9. Vorrichtung zum Weiterleiten eines Multicast-Stroms, wenn sich eine Unicast-Route zu einer Multicast-Quelle oder einem Rendezvouspunkt von einer ersten Route zu einer zweiten Route ändert, umfassend:
ein Routing-Modul, ein Weiterleitungsmodul, ein Detektionsmodul, eine abgehende Schnittstelle (E2), eine erste ankommende Schnittstelle (E1) und eine zweite ankommende Schnittstelle (E0), wobei
die erste und zweite ankommende Schnittstelle dafür ausgelegt sind, einen Multicast-Strom von Upstream-Routern zu empfangen, sich die erste ankommende Schnittstelle (E1) in Kommunikation mit einem ersten Upstream-Router befindet, der einer ersten Route entspricht, und sich die zweite ankommende Schnittstelle (E0) in Kommunikation mit einem zweiten Upstream-Router (Router R1) befindet, der einer zweiten Route entspricht;
die abgehende Schnittstelle (E2) dafür ausgelegt ist, den Multicast-Strom zu einer Downstream-Einrichtung weiterzuleiten;
das Weiterleitungsmodul dafür ausgelegt ist, den Multicast-Strom gemäß einer Anweisung des Routing-Moduls zu der abgehenden Schnittstelle (E2) weiterzuleiten, wobei der Multicast-Strom über eine durch das Routing-Modul designierte ankommende Schnittstelle empfangen wird;
**dadurch gekennzeichnet, dass** das Detektionsmodul dafür ausgelegt ist zu detektieren, ob der Multicast-Strom über die zweite ankommende Schnittstelle (E0) empfangen wird;
und das Routing-Modul für Folgendes ausgelegt ist:
Senden einer ersten Anweisung zum Herstellen eines neuen Multicast-Weiterleitungspfads über die zweite ankommende Schnittstelle (E0), wenn sich die Unicast-Route von dem Downstream-Router (Router R3) zu der Multicast-Quelle oder dem Rendezvouspunkt von der ersten Route zu der zweiten Route ändert,
Senden einer zweiten Anweisung zum Stutzen eines vorherigen Multicast-Weiterleitungspfads, der der ersten Route entspricht, über die erste ankommende Schnittstelle (E1) auf die Bedingung des Empfangs des Multicast-Stroms über die zweite ankommende Schnittstelle (E0) hin,
Anweisen des Weiterleitungsmoduls, den Multicast-Strom zu der abgehenden Schnittstelle weiterzuleiten, wobei der Multicast-Strom über die zweite ankommende Schnittstelle (E0) empfangen wird, und
Informieren der ersten ankommenden Schnittstelle (E1), den über die zweite ankommende Schnittstelle (E0) empfangenen Multicast-Strom zu terminieren, wenn das Routing-Modul informiert wird, dass das Detektionsmodul detektiert, dass der Multicast-Strom über die zweite ankommende Schnittstelle (E0) empfangen wird.

10. Vorrichtung nach Anspruch 9, wobei das Routing-Modul dafür ausgelegt ist, eine Join-Nachricht zu dem zweiten Upstream-Router (Router R1) über die zweite ankommende Schnittstelle (E0) zu senden, um den neuen Multicast-Weiterleitungspfad herzustellen.

11. Vorrichtung nach Anspruch 9, wobei das Routing-Modul dafür ausgelegt ist, eine Prune-Nachricht zu dem ersten Upstream-Router (Router R2) über die erste ankommende Schnittstelle (E1) zu senden, um den vorherigen Multicast-Weiterleitungspfad zu stutzen.

12. System zum Weiterleiten eines Multicast-Stroms, wenn sich eine Unicast-Route zu einer Multicast-Quelle oder einem Rendezvouspunkt ändert, umfassend:
eine Multicast-Quelle, einen mit der Multicast-Quelle verbundenen ersten Upstream-Router (Router R2), einen zweiten Upstream-Router (Router R1), eine Downstream-Einrichtung und
**dadurch gekennzeichnet, dass** das System ferner einen Downstream-Router (Router R3) nach einem der Ansprüche 9-11 umfasst.

## Revendications

1. Procédé d'acheminement d'un flux multidiffusion quand une route monodiffusion vers une source multidiffusion ou un point de rendez-vous change d'une première route à une seconde route, la première route correspondant à un chemin d'acheminement multidiffusion antérieur entre un premier routeur amont (routeur R2) et un routeur aval (routeur R3), la seconde route correspondant à un nouveau chemin d'acheminement multidiffusion entre un second routeur amont (routeur R1) et le routeur aval (routeur R3), un flux multidiffusion étant acheminé par l'intermédiaire du chemin d'acheminement multidiffusion antérieur, **caractérisé en ce qu'**il comprend :
l'établissement (S2) du nouveau chemin d'acheminement multidiffusion entre le routeur aval (routeur R3) et le second routeur amont (routeur R1) ;
la continuation (S2) de la réception du flux multidiffusion depuis le premier routeur amont (routeur R2) par l'intermédiaire d'une première interface entrante (E1) correspondant audit chemin d'acheminement multidiffusion antérieur et
l'acheminement du flux multidiffusion par l'intermédiaire du chemin d'acheminement multidiffusion antérieur avant que le flux multidiffusion acheminé par l'intermédiaire du nouveau chemin d'acheminement multidiffusion ne soit reçu par le routeur aval (routeur R3) ; et
l'élagage (S3) dudit chemin d'acheminement multidiffusion antérieur et le rejet du flux multidiffusion provenant du chemin d'acheminement multidiffusion antérieur une fois que le flux multidiffusion acheminé par l'intermédiaire du nouveau chemin d'acheminement multidiffusion est reçu par le routeur aval (routeur R3).

2. Procédé selon la revendication 1, dans lequel ledit établissement du nouveau chemin d'acheminement multidiffusion entre le routeur aval (routeur R3) et le second routeur amont (routeur R1) comprend :
l'envoi d'un message Join (joindre) par l'intermédiaire d'une seconde interface entrante (E0) connectée audit second routeur amont (routeur R1) ; et
l'établissement dudit nouveau chemin d'acheminement multidiffusion depuis ledit second routeur amont (routeur R1) vers ladite seconde interface entrante (E0).

3. Procédé selon la revendication 1, dans lequel ladite continuation de la réception du flux multidiffusion depuis le premier routeur amont (routeur R2) par l'intermédiaire d'une première interface entrante (E1) correspondant audit chemin d'acheminement multidiffusion antérieur et l'acheminement du flux multidiffusion par l'intermédiaire du chemin d'acheminement multidiffusion antérieur comprend :
la réception, par ledit routeur aval (routeur R3), dudit flux multidiffusion par l'intermédiaire de la première interface entrante (E1) ; et
l'acheminement, par ledit routeur aval (routeur R3), dudit flux multidiffusion jusqu'à un dispositif aval dudit routeur aval (routeur R3) par l'intermédiaire d'une interface sortante désignée par ledit routeur aval (routeur R3).

4. Procédé selon la revendication 1, dans lequel ledit élagage dudit chemin d'acheminement multidiffusion antérieur comprend :
l'envoi d'un message Prune (élaguer) au premier routeur amont (routeur R2) correspondant audit chemin d'acheminement multidiffusion antérieur par l'intermédiaire de la première interface entrante (E1).

5. Procédé selon la revendication 1, dans lequel quand ledit chemin d'acheminement multidiffusion antérieur est une arborescence de chemin source, ledit établissement du nouveau chemin d'acheminement multidiffusion entre le routeur aval (routeur R3) et le second routeur amont (routeur R1) correspondant à la seconde route comprend :
l'établissement d'une nouvelle arborescence de chemin source.

6. Procédé selon la revendication 5, dans lequel le changement de la route monodiffusion depuis ledit routeur aval (routeur R3) vers la source multidiffusion dudit flux multidiffusion de ladite première route à ladite seconde route comprend :
le changement de ladite route monodiffusion depuis ledit routeur aval (routeur R3) vers ladite source multidiffusion dudit flux multidiffusion d'une seconde meilleure route à la meilleure route.

7. Procédé selon la revendication 1, dans lequel quand ledit chemin d'acheminement multidiffusion antérieur est une arborescence de point de rendez-vous, ledit établissement du nouveau chemin d'acheminement multidiffusion entre le routeur aval (routeur R3) et le second routeur amont (routeur R1) comprend :
l'établissement d'une nouvelle arborescence de point de rendez-vous.

8. Procédé selon la revendication 7, dans lequel le changement de la route monodiffusion depuis ledit routeur aval (routeur R3) vers le point de rendez-vous dudit flux multidiffusion de ladite première route à ladite seconde route comprend :
le changement de ladite route monodiffusion depuis ledit routeur aval (routeur R3) vers ledit point de rendez-vous dudit flux multidiffusion d'une seconde meilleure route à la meilleure route.

9. Appareil d'acheminement d'un flux multidiffusion quand une route monodiffusion vers une source multidiffusion ou un point de rendez-vous change d'une première route à une seconde route, comprenant :
un module de routage, un module d'acheminement, un module de détection, une interface sortante (E2), une première interface entrante (E1), et une seconde interface entrante (E0), dans lequel
lesdites première et seconde interfaces entrantes sont adaptées pour recevoir un flux multidiffusion depuis des routeurs amont, ladite première interface entrante (E1) est en communication avec un premier routeur amont correspondant à une première route, et ladite seconde interface entrante (E0) est en communication avec un second routeur amont (R1) correspondant à une seconde route ;
ladite interface sortante (E2) est adaptée pour acheminer ledit flux multidiffusion vers un dispositif aval ;
ledit module d'acheminement est adapté pour acheminer ledit flux multidiffusion vers ladite interface sortante (E2) en vertu d'une instruction dudit module de routage, ledit flux multidiffusion étant reçu par l'intermédiaire d'une interface entrante désignée par ledit module de routage ;
**caractérisé en ce que** ledit module de détection est adapté pour détecter si ledit flux multidiffusion est reçu ou non par l'intermédiaire de ladite seconde interface entrante (E0) ;
ledit module de routage étant adapté pour
envoyer une première instruction afin d'établir un nouveau chemin d'acheminement multidiffusion par l'intermédiaire de ladite seconde interface entrante (E0) quand la route monodiffusion depuis le routeur aval (routeur R3) vers la source multidiffusion ou le point de rendez-vous change de ladite première route à ladite seconde route,
envoyer une seconde instruction afin d'élaguer un chemin d'acheminement multidiffusion antérieur correspondant à ladite première route par l'intermédiaire de ladite première interface entrante (E1) lors de la condition de réception dudit flux multidiffusion par l'intermédiaire de ladite seconde interface entrante (E0),
ordonner audit module d'acheminement d'acheminer ledit flux multidiffusion vers ladite interface sortante, ledit flux multidiffusion étant reçu par l'intermédiaire de ladite seconde interface entrante (E0), et
informer ladite première interface entrante (E1) de mettre fin au flux multidiffusion reçu par l'intermédiaire de ladite seconde interface entrante (E0) quand ledit module de routage est informé que ledit module de détection détecte que ledit flux multidiffusion est reçu par l'intermédiaire de ladite seconde interface entrante (E0).

10. Appareil selon la revendication 9, dans lequel ledit module de routage est adapté pour envoyer un message Join (joindre) audit second routeur amont (routeur R1) par l'intermédiaire de ladite seconde interface entrante (E0) afin d'établir ledit nouveau chemin d'acheminement multidiffusion.

11. Appareil selon la revendication 9, dans lequel ledit module de routage est adapté pour envoyer un message Prune (élaguer) audit premier routeur amont (routeur R2) par l'intermédiaire de ladite première interface entrante (E1) afin d'élaguer ledit chemin d'acheminement multidiffusion antérieur.

12. Système d'acheminement d'un flux multidiffusion quand une route monodiffusion vers une source multidiffusion ou un point de rendez-vous change, comprenant :
une source multidiffusion, un premier routeur amont (routeur R2) connecté à la source multidiffusion, un second routeur amont (routeur R1), un dispositif aval, et
**caractérisé en ce que** le système comprend en outre un routeur aval (routeur R3) selon l'une quelconque des revendications 9 à 11.
